# EUROPEAN PATENT APPLICATION

(11) **EP 1 736 521 A1**
(43) Date of publication of application: **27.12.2006**
(21) Application number: 05105612.5
(22) Date of filing: 23.06.2005
(51) Int. Cl.: C09K 3/24

(54) **Composition for artificial snow**

(71) Applicant: Centimo N.V., Curacao (AN)
(72) Inventor: Overwater, Jan, 1424 RP, De Kwakel (NL)
(74) Representative: Beetz, Tom

(57) **Abstract**

The invention pertains to a composition for obtaining artificial snow comprising:
1-95 wt.% of a powdery cellulose or cellulose derivative; 0.01-5 wt.% of a surfactant;
1-70 wt.% of an adhesive material;
optionally up to 5 wt.% of titanium dioxide;
optionally up to 2 wt.% of a fungicide; and
the balance being water.

Said composition can be used to make a spray for spraying vegetal materials such as flowers, plants, or trees for obtaining a snow-like appearance.

## Description

The invention relates to a composition for obtaining artificial snow, a spray containing the same and a container containing said spray. The invention further pertains to a method for obtaining artificial snow onto flowers, plants or trees.

Compositions for obtaining artificial snow are known. However, the known compositions are suitable for decorative purposes only or are intended for replacing natural snow, for instance for use for skiing in a hall. The known decorative artificial snows are unsuitable for applying onto living flowers, plants and trees. The present invention relates to artificial snow for decorative purposes, which can be used for living vegetable materials.

In WO 9909093 a moldable composition was disclosed including a binding mixture and filler in the form of crystalline styrene particles. The binding mixture includes polyvinyl-based binders such as polyvinyl alcohol, water, and a cross-linking agent such as borax, and a humectant such as propylene glycol.

In WO 0159027 an artificial snow composition was disclosed in the form of individualized flakes, which has the soft feel of natural snow. The method for obtaining said composition consists in mixing a hydrophilic absorbent polymer with specific characteristics and water. This artificial snow is suitable for replacing natural snow when making ski tracks.

In GB 1313097 a decorative composition for application to a substrate comprises a dry mixture of an adhesive and flock material in particulate form. The compositions may be applied, e.g. by spraying to ornamental articles such as a Christmas tree, float, bill board, or wallpaper. Luminous material may be present as a surface coating or as an impregnant for the flock material. The flock material may be plastics, e.g. expanded cellular polystyrene, vinyl resin, polyvinylidene chloride, polyethylene or polypropylene. Other particles mentioned are volcanic ash and mica. Although mentioned for use onto Christmas trees, these compositions are unsuitable for applying onto living trees and plants.

In GB 873735 a decorative composition was disclosed, which may be sprayed with water onto articles including Christmas trees to give a snow- or frost-like appearance, comprising a mixture of sulfite pulp such as cellulose fiber and pre-gelatinized flour or starch as adhesive. This composition provides a fireproof composition by introducing a fireproofing agent such as borax or monobasic calcium phosphate dissolved in water

None of the above mentioned prior art compositions is suitable for applying to living flowers, plants or trees, i.e. for applying artificial snow thereon without the risk, or even the certainty, that these will not survive. There is thus a need for a composition that can give a material with a snow-like appearance, which can be applied onto a living vegetable material such as a flower, plant or tree, without running the risk that said vegetable material dies.

The present invention provides such composition. To this end the invention provides for a composition for obtaining artificial snow comprising:
1-95 wt.% of a powdery cellulose or cellulose derivative;
0.01-5 wt.% of a surfactant;
1-70 wt.% of an adhesive material;
optionally up to 5 wt.% of titanium dioxide;
optionally up to 2 wt.% of a fungicide; and
the balance being water.

Cellulose can be any standard cellulose that may be obtained from wood pulp. Cellulose derivatives may also be used, such as carboxymethyl celluloses (CMC), ethyl hydroxyethyl cellulose (EHEC), methyl ethyl hydroxyethyl cellulose (MEHEC), and hydrophobically modified EHEC and CMC (HM EHEC and HM CMC). The cellulose or cellulose derivative is used in powdery form to simulate the snow-like structure. A wide range of 1-95 wt.% of cellulose can be used, but usually 10 to 30 wt.% (based on the total composition) suffices.

The surfactant preferably is an alcohol ethoxylate having the general formula:

R-O-(CH₂-CH₂O)ₙ-H

wherein R is a (C₁-C₁₂) alkyl group, and n is an integer in the range of 1 to 100. Preferably R is methyl or ethyl, and n is from 2 to 20. Preferred amounts of surfactant are between 0.05 and 2 wt.% (based on the total composition).

The composition comprises an adhesive to adhere the cellulose to the vegetable material. Suitable adhesives include vinyl-based adhesives, such as polyvinyl acrylate and polyvinyl ether, which both are commercially available in a great variety. Usually an amount between 10 to 30 wt.% based on the total composition, is sufficient to adhere the cellulose to the vegetable material. However, the precise amount depends on the precise nature of the adhesive and the cellulose, and using more or less of this amount may be possible, as can be determined easily by the artisan.

Titanium dioxide may be added as a colorant to whiten the composition. Suitable amounts are preferably 0.1-2 wt.% (based on the total composition).

A fungicide may be added to prevent fungus forming on the flower, plant, or tree. Suitable fungicides are known in the art and include Panoctine (guazatine), Fungalflor, Magnate (imazalil), and benzimidazole fungicides. Usually low amounts suffice, such as 0.05-0.2 wt.% (based on the total composition).

In a particularly preferred embodiment the composition comprises:
10-30 wt.% of a powdery cellulose or cellulose derivative;
0.05-2 wt.% of an alcohol ethoxylate;
0.1-2 wt.% titanium dioxide;
0.05-0.2 wt.% of a fungicide;
10-30 wt.% of a polyvinyl acrylate; and
the balance being 50-90 wt.% of water.

The composition may further contain other additives such as colorants such as rhodamine and uranine dyes, flavoring agents such as gluhwein or pine scent, for instance for use onto Christmas trees, fire-retardants such as phosphor compounds, optical brighteners such as derivatives of 4,4-diamino-stilbene-2,2-disulfonic acid, 4-methyl-7-diethylaminocoumarin and umbelliferone, and luminescent compounds such as organic and inorganic ultra-violet responsive luminescent materials. Among the inorganic materials are the phosphors, which are generally polycrystalline in nature, composed of sulfides or silicate of zinc, cadmium, barium, or strontium. Small amounts of activators are often associated therewith such as copper, silver, manganese, or rare earths. It should be understood, however, that these additives should be present in small enough amounts to not harm the vegetable material. Fluorescence materials can also be added, such as the minerals scheelite, willemite, calcite, scapolite, and sphalerite. If necessary the adhesive may further comprise pre-gellatinized starch, or other natural glues.

Water is added to the composition to obtain 5 to 95 wt.% of water, preferably 50 to 90 wt.% of water in the final composition.

The compositions of the invention are suitable for making a spray in a conventional manner. The making of a spray is well known to the skilled person and comprises adding a propellant to the composition.

In another embodiment the invention comprises a container that is filled with the composition to provide a spray when released from said container.

The invention further provides a method for spraying vegetable materials wherein spraying is performed by using a compressor for generating a pressure and a nozzle for spraying the composition onto the vegetal material.

## Claims

1. A composition for obtaining artificial snow comprising:
1-95 wt.% of a powdery cellulose or cellulose derivative;
0.01-5 wt.% of a surfactant;
1-70 wt.% of an adhesive material;
optionally up to 5 wt.% of titanium dioxide;
optionally up to 2 wt.% of a fungicide; and
the balance being water.

2. The composition of claim 1 wherein the adhesive material is a polyvinyl acrylate or polyvinyl ether.

3. The composition of claim 1 or 2 wherein the surfactant is an alcohol ethoxylate.

4. The composition of claim 1 comprising
10-30 wt.% of a powdery cellulose or cellulose derivative;
0.05-2 wt.% of an alcohol ethoxylate;
0.1-2 wt.% titanium dioxide;
0.05-0.2 wt.% of a fungicide;
10-30 wt.% of a polyvinyl acrylate; and
the balance being 50-90 wt.% of water.

5. A spray comprising the composition of any one of claims 1-4.

6. A container comprising the composition of any one of claims 1-4 and a propellant.

7. A method for obtaining artificial snow onto flowers, plants, or trees by applying the composition of any one of claims 1-4 onto said flower, plant, or tree.

8. The method according to claim 7 wherein the artificial snow is obtained by spraying.

9. The method according to claim 8 wherein spraying is performed by using a compressor for generating a pressure and a nozzle for spraying the composition of any one of claims 1-4 under pressure.
